# EUROPEAN PATENT APPLICATION

(11) **EP 1 561 738 A2**
(43) Date of publication of application: **10.08.2005**
(21) Application number: 04022424.8
(22) Date of filing: 21.09.2004
(51) Int. Cl.: C04B 35/56

(54) **Method for producing a carbon layer-covering transition metallic nano-structure or transition metallic nano-structure pattern and carbon layer-covering transition metallic nano-structure or transition metallic nano-structure pattern**

(30) Priority: 03.02.2004 JP 2004026839
(71) Applicant: Inter-Univerity Research Institute Corporation National Institutes of Natural Sciences, Okazaki City, Aichi Pref. (JP)
(72) Inventor: Nishi, Nobuyuki, Okazaki City Aichi Pref. (JP); Kosugi, Kentaro, Okazaki City Aichi Pref. (JP)
(74) Representative: von Hellfeld, Axel, Dr. Dipl.-Phys.

(57) **Abstract**

An anhydrous chloride with a formula of MCl₂ (M=Fe, Co or Ni) is dissolved into an anhydrous acetonitrile solvent to form a chloride-acetonitrile solution. Then, calcium carbide minute powders are added and dispersed in the chloride-acetonitrile solution to form a reactive solution. Then, the reactive solution is thermally treated (first thermal treatment) to form a nano-powder made of a transition metal acetylide compound having an M-C₂-M bond, a tetragonal structure, and a formula of MC₂ (herein, M=Fe, Co or Ni). Then, the nano-powder is thermally treated (second thermal treatment) again at a temperature higher than the temperature in the first thermal treatment to form a carbon layer-covering transition metallic nano-structure wherein a metallic core made of the transition metal M is covered with a carbon layer.

## Description

### BACKGROUND OF THE INVENTION

### Field of the Invention

This invention relates to a method for producing a carbon layer-covering transition metallic nano-structure, a method for producing a carbon layer-covering transition metallic nano-structure pattern, a carbon layer-covering transition metallic nano-structure, and a carbon layer-covering transition metallic nano-structure pattern.

### Description of the related art

Recently, an attention is paid to oxide nano-powders made of γ-Fe₂O₃ with ferromagnetic property to be employed as magnetic recording media. Ordering the sizes of the oxide nano-powders uniformly, however, is difficult, and the compositions of the oxide nano-powders may be changed so that in the oxide nano-powders, the ferromagnetic property relating to the composition of the γ-Fe₂O₃ is changed with time to the paramagnetic property relating to the composition of the α-Fe₂O₃. As a result, it is difficult to practically use the oxide nano-powders for high density recording media. Moreover, it is reported that the carbon layer-covering transition metallic nano-structure is made by means of electric discharge machining, but the producing method using the electric discharging machining may create a large amount of by-products as contamination and can realize only low yield point.

In this point of view, it is required that a clean and high yield point producing method of carbon layer-covering transition metallic nano-structure is required, wherein the transition metallic nano-particles are covered with the respective carbon layers. According to the resultant carbon layer-covering transition metallic nano-structures, since the transition metallic nano-powders with ferromagnetic property are covered with the respective carbon layers, the transition metallic nano-powders can hold the ferromagnetic property for a long time.

However, the producing method for the carbon layer-covering transition metallic nano-particles has not established yet, and there are some problems in controlling the sizes of the nano-particles and the like. As a result, the intended carbon layer-covering transition metallic nano-structures which are practical usable have been not obtained yet.

### SUMMERY OF THE INVENTION

It is an object of the present invention to provide a carbon layer-covering transition metallic nano-structure which is practically usable.

For achieving the above object, this invention relates to a method for producing a carbon layer-covering transition metallic nano-structure, comprising the steps of:
dissolving an anhydrous chloride with a formula of MCl₂ (M=Fe, Co or Ni) into an anhydrous acetonitrile solvent to form a chloride-acetonitrile solution,
adding and dispersing calcium carbide minute powders into the chloride-acetonitrile solution at a molar quantity equal to or smaller by 1-30mol% than a molar quantity of the anhydrous chloride to form a reactive solution,
performing a first thermal treatment of heating the reactive solution at a predetermined temperature to chemically react the anhydrous chloride with the calcium carbide minute powders in the reactive solution to form a nano-powder made of a transition metal acetylide compound having an M-C₂-M bond, a tetragonal structure, and a formula of MC₂ (herein, M=Fe, Co or Ni), and
performing a second thermal treatment of heating the nano-powder at a temperature higher than the temperature in the first thermal treatment to form a carbon layer-covering transition metallic nano-structure wherein a metallic core made of the transition metal M is covered with a carbon layer.

This invention also relates to a method for producing a carbon layer-covering transition metallic nano-structure, comprising the steps of:
dissolving an anhydrous chloride with a formula of MCl₂ (M=Fe, Co or Ni) into an anhydrous acetonitrile solvent to form a chloride-acetonitrile solution,
adding and dispersing calcium carbide minute powders into the chloride-acetonitrile solution at a molar quantity equal to or smaller by 1-30mol% than a molar quantity of the anhydrous chloride to form a reactive solution,
heating the reactive solution at a predetermined temperature to chemically react the anhydrous chloride with the calcium carbide minute powders in the reactive solution to form a nano-powder made of a transition metal acetylide compound having an M-C₂-M bond, a tetragonal structure, and a formula of MC₂ (herein, M=Fe, Co or Ni), and
irradiating an electron beam or an electromagnetic wave onto the nano-powder to form a carbon layer-covering transition metallic nano-structure wherein a metallic core made of the transition metal M is covered with a carbon layer.

The inventors have succeeded in developing a transition metal acetylide compound as a raw material of the intended carbon layer-covering transition metallic nano-structure. The transition metal acetylide compound according to the present invention includes a tetragonal structure such as CaC₂ or MgC₂, and thus, includes a transition metallic positive ion (M²⁺) and a carbon molecule negative ion (C₂²⁻). The carbon molecule negative ion has a strong reducing power, and for example, reduces the transition metallic positive ion into the neutral transition metal over 200°C while the carbon molecule negative ion is oxidized into the neutral carbon radical (C₂ radical). The transition metal is bonded with the adjacent same transition metals, and the carbon radical is bonded with the adjacent same carbon radicals.

As a result, when the nano-powders made of the transition metal acetylide compound are heated over 200°C, the metallic cores are formed from the bonded transition metals, and the carbon shells (carbon layers) are formed from the bonded carbon radicals. As a result, the intended carbon layer-covering transition metallic nano-structures can be provided.

The size of each nano-powder can be controlled easily commensurate with the producing method of the nano-powder which will be described in detail hereinafter. On the other hand, since each carbon layer-covering transition metallic nano-structure can be formed by heating each nano-powder, the size of each carbon layer-covering transition metallic nano-structure can be easily controlled commensurate with the easy controllability of each nano-powder as mentioned above.

The heating means includes a direct heating means as defined in the first producing method of the present invention and an indirect heating means such as electron beam irradiation or electromagnetic wave irradiation such as light beam irradiation as defined in the second producing method of the present invention.

The carbon layer-covering transition metallic nano-structure made of the transition metal acetylide compound is formed as a minute particle, so that the nano-structure can be employed for an electron transfer wire, a magnetic toner for copying machine and a contrast fortifier in magnetic resonance image photograph, in addition to for a magnetic recording medium material (recording element unit). The nano-structure can be also employed for a hydrogen absorbing nano-particle when a rare metal is contained in the nano-structure.

As mentioned above, according to the present invention can be provided a carbon layer-covering transition metallic nano-structure which is practically usable.

### BRIEF DESCRIPTION OF THE DRAWINGS

For better understanding of the present invention, reference is made to the attached drawings, wherein
Fig. 1 is a structural view illustrating an apparatus to be employed in producing a transition metal acetylide compound as a raw material of an intended carbon layer-covering transition metallic nano-structure according to the present invention,
Fig. 2 illustrates steps in a producing method of carbon layer-covering transition metallic nano-structure pattern according to the present invention, and
Fig. 3 is a graph illustrating a change in hysteresis curve with temperature of the carbon layer-covering transition metallic nano-structure of the present invention.

### DESCRIPTION OF THE PREFERRED EMBODIMENTS

Other features and advantages of the present invention will be described hereinafter.

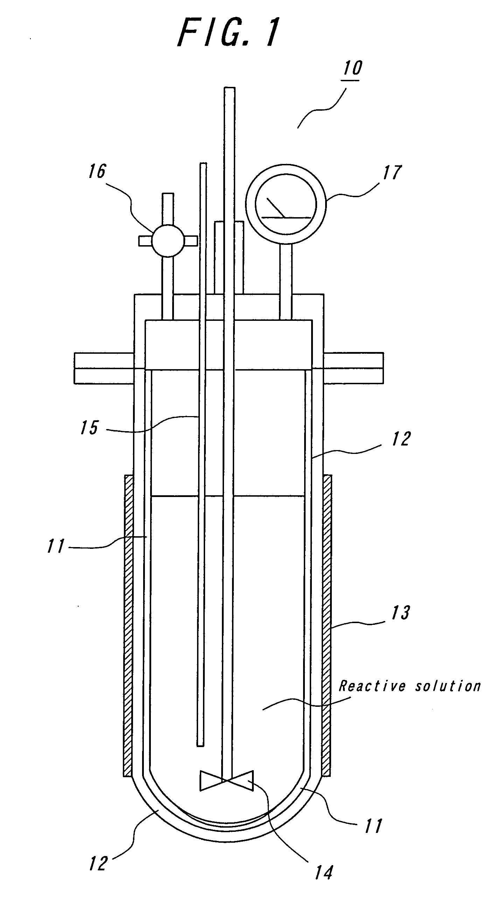

Fig. 1 is a structural view illustrating an apparatus to be employed in producing a transition metal acetylide compound as a raw material of an intended carbon layer-covering transition metallic nano-structure according to the present invention. The apparatus 10 illustrated in Fig. 1 includes a glass vessel 11 to charge a given reactive solution and a pressure tight case 12 made of stainless steel which is disposed outside from the glass vessel 11. A heater 13 is disposed on the periphery of the pressure tight case 12, and a rotator 14 and a temperature sensor 15 are disposed on the bottom of the glass vessel 11. A gas inlet 16 and a pressure gauge 17 are provided at the pressure tight case 12.

In the present invention, first of all, an anhydrous chloride raw material with a formula of MCl₂ (M=Fe, Co or Ni) is prepared, and dissolved into an anhydrous acetonitrile solvent charged into the glass vessel 11 illustrated in Fig. 1, to form a chloride-acetonitrile solution. Then, calcium carbide minute powders are added and dispersed in the chloride acetonitrile solution in the glass vessel 11 at a molar quantity equal to or a smaller by 1-30mol% than the molar quantity of the anhydrous chloride, thereby to form a reactive solution.

Herein, the calcium carbide powders are mechanically made into a size of several µm or below with a mortor, etc. The reactive solution may be formed in another vessel, and then, injected into the glass vessel 11 in Fig. 1, instead of directly forming the reactive solution in the glass vessel 11 as described above.

Then, the reactive solution is heated to a predetermined temperature with the heater 13 with agitating the reactive solution with the rotator 14, to chemically react the anhydrous chloride with the calcium carbide in the reactive solution (first thermal treatment). In this case, it is required that oxygen and water are not contained into the glass vessel 11 possibly. Therefore, it is desired that an inert gas is introduced into the glass vessel 11 from the gas inlet 16 so that the chemical reaction can be carried out under the inert atmosphere.

Then, in the chemical reaction, the temperature of the reactive solution is monitored with the temperature sensor 13, and the pressure of the glass vessel 11 is monitored with the pressure gauge 17.

A give period of time elapsed, the black minute powders made of the transition metal acetylide compound are gathered up, and washed sufficiently with anhydrous methanol and anhydrous dichloromethane to remove ion species and remnant calcium carbide. The intended nano-powders made of the transition metal acetylide compound can be provided through the above-mentioned steps.

In the first producing method of the present invention, the nano-powders in the glass vessel 11 is heated at a temperature higher than the temperature at the first producing method (second thermal treatment). In this case, the carbon molecule negative ions of the nano-powders reduce the transition metallic positive ions of the nano-powders into the neutral transition metals while the carbon molecule negative ions are oxidized into the neutral carbon radicals (C₂ radicals). The transition metals are bonded with the adjacent same transition metals, and the carbon radicals are bonded with the adjacent same carbon radicals. As a result, the metallic cores are formed from the bonded transition metals, and the carbon shells (carbon layers) are formed from the bonded carbon radicals. As a result, the black minute powders made of the carbon layer-covering transition metallic nano-structures can be provided.

Herein, it is desired that in order to the prevent the contamination of oxygen and water in the glass vessel 11, the second thermal treatment is carried out under high vacuum atmosphere or inert gas atmosphere.

The minute powders are washed with anhydrous methanol and anhydrous dichloromethane, etc. to remove solvent condensates, ion species, remnant calcium carbide and etc., sufficiently. Then, non-magnetic precipitations are separated from the resultant solution with a magnet, and organic products are also removed from the resultant solution by means of supersonic wave. As a result, the intended minute powders of the inherent carbon layer-covering transition metallic nano-structures without contamination can be provided. In the present invention, the above-mentioned purifying process is normally repeated several times.

If the anhydrous chloride is made of FeCl₂ to produce carbon layer-covering iron nano-structures (as minute powders), the heating temperature in the first thermal treatment is set within 75-200°C, and the heating temperature in the second thermal treatment is set to 200°C or over.

If the anhydrous chloride is made of CoCl₂ to produce carbon layer-covering cobalt nano-structures (as minute powders), the heating temperature in the first thermal treatment is set within 75-200°C, and the heating temperature in the second thermal treatment is set to 200°C or over.

If the anhydrous chloride is made of NiCl₂ to produce carbon layer-covering nickel nano-structures (as minute powders), the heating temperature in the first thermal treatment is set within 75-160°C, and the heating temperature in the second thermal treatment is set to 160°C or over.

If the first thermal treatment and the second thermal treatment are carried out under the above-mentioned preferable temperatures, respectively, the carbon layer-covering transition metallic nano-structures can be made as minute powders easily and efficiently.

In any case, if the heating temperature in the first thermal treatment is set to 100°C or over, the condensation reaction of the solvent may occur, and some by-products may be formed to some degrees. Then, if the heating temperature is set to 150°C or over, the size of each nano-powder may be increased, e.g., beyond 10nm. In order to produce minute nano-powders with respective sizes of 10nm or below, therefore, it is desired that the heating temperature is set to 150°C or below. In order to prevent the creation of the by-products, it is desired that the heating temperature is set to 100°C or below.

If the heating temperature in the second thermal treatment is set to 250°C or over, side reactions in the chemical reaction (reducing reaction and oxidizing reaction) may be activated to create excess by-products. If the heating temperature in the second thermal treatment is set to 300°C or over, the sizes of the carbon layer-covering transition metallic nano-structures are increased. However, the coercive forces of the nano-structures are increased as the sizes of the nano-structures are increased. In this point of view, the upper limit heating temperature in the second thermal treatment is determined in view of the sizes and physical properties such as coercive force of the nano-structures and the kind and amount of by-products to be made through the second thermal treatment.

In the first producing method of the present invention, the second thermal treatment may be carried out using another heating apparatus, instead of the apparatus illustrated in Fig. 1.

In the second producing method of the present invention, it is possible that by irradiating electron beams or electromagnetic waves onto the nano-powders made of the transition metal acetylide compound, instead of the second thermal treatment, the intended carbon layer-covering transition metallic nano-structures can be provided. In the second thermal treatment, the nano-powders are directly heated with the heater 13 to induce the reducing reaction of the carbon molecule negative ions (C₂²⁻ ions), but in the irradiation treatment, the nano-powders are indirectly heated by the electron beam irradiation or the electromagnetic wave irradiation to induce the reducing reaction of the carbon molecule negative ions (C₂²⁻ ions).

Therefore, the irradiation intensity of the electron beams or the electromagnetic waves is determined so that the nano-powders are heated enough to induce the reducing reaction of the carbon molecule negative ions (C₂²⁻ ions).

The sizes of the carbon layer-covering transition metallic nano-structures can be reduced to 10nm or below by controlling the respective heating temperatures in the first thermal treatment and the second thermal treatment, etc. Then, if the transition metal acetylide compound constituting the nano-powders is an iron acetylide compound or a cobalt acetylide compound and the size of the single crystal domain of the compound is within 5-300nm, the carbon layer-covering transition metallic nano-structures can exhibit ferromagnetic property. Therefore, the carbon layer-covering transition metallic nano-structures can have coercive forces of 200 gausses or over at room temperature, respectively.

Under any condition except the above-mentioned condition, the carbon layer-covering transition metallic nano-structures can exhibit super paramagnetic property.

Particularly, even though the carbon layer-covering iron nano-structures and the carbon layer-covering cobalt nano-structures which have large anisotropies, respectively, are reduced in size within 10-20nm, the nano-structures can have coercive forces of 230 gausses or over at room temperature, respectively. The thickness of each carbon layer-covering transition metallic nano-structure is within 3-6nm.

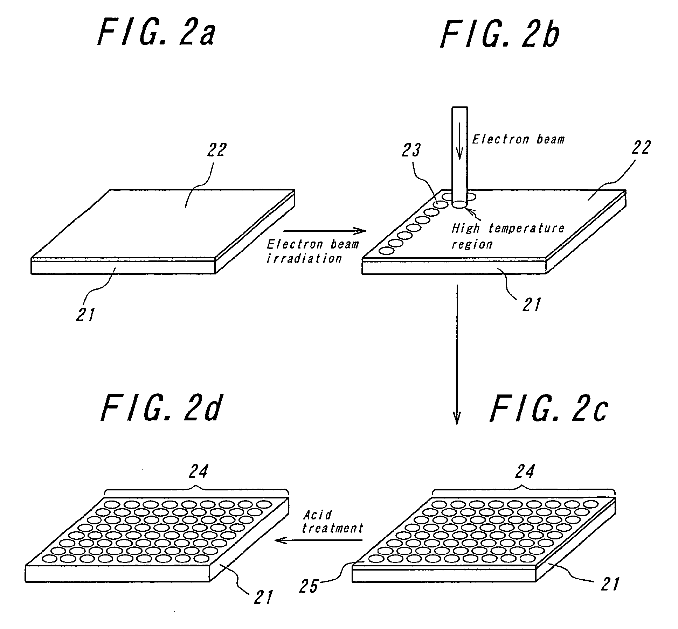

Fig. 2 is an explanatory view illustrating steps in another producing method of carbon layer-covering transition metallic nano-structure according to the present invention. In this embodiment, the nano-powders made of the transition metal acetylide compound are made as described previously, and mixed with a binder. Then, as illustrated in Fig. 2(a), the mixed solution is coated on a given substrate 21, and the binder of the coated layer is dissolved and removed through thermal treatment. In this way, a layer 22 wherein the nano-powders made of the transition metal acetylide compound are agglomerated is formed. Then, as illustrated in Fig. 2(b), electron beams are irradiated onto the layer 22 to induce the reducing reaction of the carbon molecule negative ion (C₂²⁻ ion) at the irradiated region and to form carbon layer-covering transition metallic nano-structure 23. The above-mentioned irradiating process is repeated several times to form a plurality of carbon layer-covering transition metallic nano-structures 23 in matrix on the layer 22 and thus, to form a carbon layer-covering transition metallic nano-structure pattern 24 on the layer 22, as illustrated in Fig. 2(c).

In the state as illustrated in Fig. 2(c), transition metal acetylide compound fragments of the layer 22 exist in between the respective adjacent nano-structures 23 of the carbon layer-covering transition metallic nano-structure pattern 24. In this case, since transition metal acetylide compound fragments exhibit super paramagnetic property, the transition metal acetylide compound fragments can prevent the respective magnetic dipole interactions between the adjacent nano-structures 23.

Herein, the transition metal acetylide compound fragments may be removed by means of acid cleaning to form only the carbon layer-covering transition metallic nano-structure pattern 24 on the substrate 21.

Moreover, the multilayered structure including the substrate 21 and the layer 22 with the carbon layer-covering transition metallic nano-structure pattern 24 illustrated in Fig. 2(c) is heated to convert the lower side of the layer 22 into a metallic bulk layer. In this case, the layer 22 is composed of the metallic bulk layer as a lower side layer and a carbon layer as an upper side layer including the carbon layer-covering transition metallic nano-structure pattern 24.

### Example:

According to the producing steps of the first producing method of the present invention as described above, carbon layer-covering iron nano-structures were obtained. Herein, the heating temperature in the first thermal treatment was set within 75-85°C, and the heating temperature in the second thermal treatment was set to 250°C. In both of the first thermal treatment and the second thermal treatment, the heating periods of time were set to 48 hours, respectively. The average size of the nano-structures was 60nm, and the average thickness of the carbon layers of the nano-structures was 3.5nm.

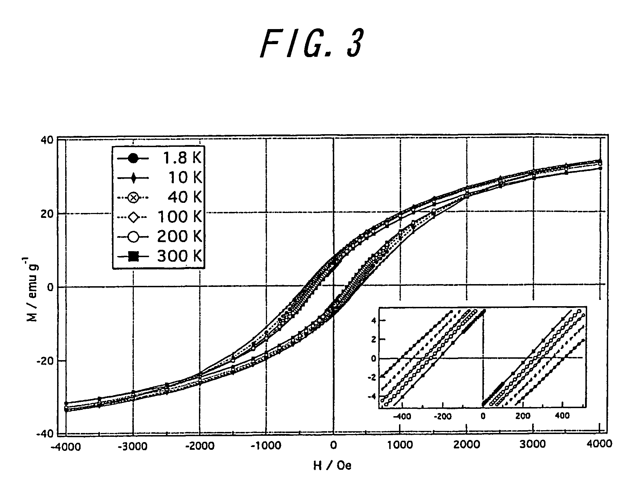

Fig. 3 is a graph illustrating a change in hysteresis curve of the nano-structure with temperature. As is apparent from Fig. 3, the nano-structure exhibits ferromagnetic hysteresis curve, and thus, it is confirmed that the nano-structure exhibits ferromagnetic property.

Although the present invention was described in detail with reference to the above examples, this invention is not limited to the above disclosure and every kind of variation and modification may be made without departing from the scope of the present invention.

## Claims

1. A method for producing a carbon layer-covering transition metallic nano-structure, comprising the steps of:
dissolving an anhydrous chloride with a formula of MCl₂ (M=Fe, Co or Ni) into an anhydrous acetonitrile solvent to form a chloride-acetonitrile solution,
adding and dispersing calcium carbide minute powders into said chloride-acetonitrile solution at a molar quantity equal to or smaller by 1-30mol% than a molar quantity of said anhydrous chloride to form a reactive solution,
performing a first thermal treatment of heating said reactive solution at a predetermined temperature to chemically react said anhydrous chloride with said calcium carbide minute powders in said reactive solution to form a nano-powder made of a transition metal acetylide compound having an M-C₂-M bond, a tetragonal structure, and a formula of MC₂ (herein, M=Fe, Co or Ni), and
performing a second thermal treatment of heating said nano-powder at a temperature higher than said temperature in said first thermal treatment to form a carbon layer-covering transition metallic nano-structure wherein a metallic core made of said transition metal M is covered with a carbon layer.

2. The producing method as defined in claim 1, wherein said anhydrous chloride is FeCl₂, and said first thermal treatment is performed within a temperature range of 75-200°C, and said second thermal treatment is performed within a temperature range of 200°C or over.

3. The producing method as defined in claim 1, wherein said anhydrous chloride is CoCl₂, and said first thermal treatment is performed within a temperature range of 75-200°C, and said second thermal treatment is performed within a temperature range of 200°C or over.

4. The producing method as defined in claim 1, wherein said anhydrous chloride is NiCl₂, and said first thermal treatment is performed within a temperature range of 75-160°C, and said second thermal treatment is performed within a temperature range of 160°C or over.

5. A method for producing a carbon layer-covering transition metallic nano-structure, comprising the steps of:
dissolving an anhydrous chloride with a formula of MCl₂ (M=Fe, Co or Ni) into an anhydrous acetonitrile solvent to form a chloride-acetonitrile solution,
adding and dispersing calcium carbide minute powders into said chloride-acetonitrile solution at a molar quantity equal to or smaller by 1-30mol% than a molar quantity of said anhydrous chloride to form a reactive solution,
heating said reactive solution at a predetermined temperature to chemically react said anhydrous chloride with said calcium carbide minute powders in said reactive solution to form a nano-powder made of a transition metal acetylide compound having an M-C₂-M bond, a tetragonal structure, and a formula of MC₂ (herein, M=Fe, Co or Ni), and
irradiating an electron beam or an electromagnetic wave onto said nano-powder to form a carbon layer-covering transition metallic nano-structure
wherein a metallic core made of said transition metal M is covered with a carbon layer.

6. The producing method as defined in any one of claims 1-5, wherein said transition metal acetylide is an iron acetylide or a cobalt acetylide, and said carbon layer-covering transition metallic nano-structure exhibits ferromagnetic property at room temperature within a single crystal domain size range of 5-300nm of said carbon layer-covering transition metallic nano-structure.

7. The producing method as defined in any one of claims 1-5, wherein said carbon layer-covering transition metallic nano-structure exhibits super paramagnetic property.

8. The producing method as defined in claim 6, wherein said carbon layer-covering transition metallic nano-structure has a coercive force of 200 gausses or over at room temperature.

9. The producing method as defined in any one of claims 1-8, wherein a size of said carbon layer-covering transition metallic nano-structure is set to 10nm or below.

10. The producing method as defined in any one of claims 1-9, wherein a thickness of said carbon layer-covering transition metallic nano-structure is set within 3-6nm.

11. A method for producing a carbon layer-covering transition metallic nano-structure pattern, comprising the steps of:
dissolving an anhydrous chloride with a formula of MCl₂ (M=Fe, Co or Ni) into an anhydrous acetonitrile solvent to form a chloride-acetonitrile solution,
adding and dispersing calcium carbide minute powders into said chloride-acetonitrile solution at a molar quantity equal to or smaller by 1-30mol% than a molar quantity of said anhydrous chloride to form a reactive solution,
heating said reactive solution at a predetermined temperature to chemically react said anhydrous chloride with said calcium carbide minute powders in said reactive solution to form nano-powders made of a transition metal acetylide compound having an M-C₂-M bond, a tetragonal structure, and a formula of MC₂ (herein, M=Fe, Co or Ni),
processing said nano-powders to form a layer made of said transition metal acetylide compound, and
irradiating electron beams or electromagnetic waves onto said layer in spots to form a carbon layer-covering transition metallic nano-structure pattern
wherein carbon layer-covering transition metallic nano-structures, each being composed of a metallic core made of said transition metal M and a carbon layer covering said metallic core, are arranged in matrix.

12. The producing method as defined in claim 11, further comprising the step of removing fragments of said layer except said carbon layer-covering nano-structures.

13. A carbon layer-covering transition metallic nano-structure comprising:
a metallic core made of Fe or Co, and
a carbon layer so formed as to cover said metallic core,
wherein said carbon layer-covering transition metallic nano-structure exhibits ferromagnetic property at room temperature.

14. A carbon layer-covering transition metallic nano-structure comprising:
a metallic core made of Fe, Co or Ni, and
a carbon layer so formed as to cover said metallic core,
wherein said carbon layer-covering transition metallic nano-structure exhibits super paramagnetic property at room temperature.

15. The carbon layer-covering transition metallic nano-structure as defined in claim 13, wherein said carbon layer-covering transition metallic nano-structure has a coercive force of 200 gausses or over at room temperature.

16. The carbon layer-covering transition metallic nano-structure as defined in any one of claims 13-15, wherein a size of said carbon layer-covering transition metallic nano-structure is 10nm or below.

17. The carbon layer-covering transition metallic nano-structure as defined in any one of claims 13-16, wherein a thickness of said carbon layer is within 3-6nm.

18. A carbon layer-covering transition metallic nano-structure pattern comprising carbon layer-covering transition metallic nano-structures, each including a metallic core made of Fe, Co or Ni, and a carbon layer so formed as to cover said metallic core, wherein said carbon layer-covering transition metallic nano-structures are arranged in matrix.

19. The carbon layer-covering transition metallic nano-structure pattern as defined in claim 18, further comprising super paramagnetic fragments in between adjacent ones of said carbon layer-covering transition metallic nano-structures, wherein magnetic dipole interactions between said adjacent ones of said carbon layer-covering transition metallic nano-structures are prevented.
